# FASCICULE DE BREVET EUROPEEN

(11) **EP 3 299 590 B1**
(45) Date de publication et mention de la délivrance du brevet: **24.07.2019**
(21) Numéro de dépôt: 17189218.5
(22) Date de dépôt: 04.09.2017
(51) Int. Cl.: F01D 25/16, F01D 25/24

(54) **CARTER INTERMEDIAIRE DE TURBINE DE TURBOMACHINE**
ZWISCHENGEHÄUSE EINER TURBINE EINER STRÖMUNGSMASCHINE
INTERMEDIATE CASING OF A TURBINE OF A TURBOMACHINE

(30) Priorité: 06.09.2016 FR 1658263
(43) Date de publication de la demande: 28.03.2018
(73) Titulaire: SAFRAN AIRCRAFT ENGINES, 75015 Paris (FR)
(72) Inventeur: BLANCHARD, Stéphane, Pierre, Guillaume, 77550 MOISSY-CRAMAYEL (FR); CONDAT, Hélène, Myriam, 77550 MOISSY-CRAMAYEL (FR)
(74) Mandataire: Jolly, Christophe

(56) Documents cités:
- EP-A1- 1 965 034
- EP-A1- 2 505 791
- EP-A1- 3 048 270
- US-A1- 2010 303 608
- US-A1- 2015 226 125
- US-A1- 2015 260 057

## Description

La présente invention concerne une turbine de turbomachine, et notamment la fixation de différents carters de cette turbine entre eux.

Une turbine comprend, généralement, plusieurs carters successifs le long de l'axe longitudinal de la turbine, ces carters servent de protection d'éléments de la turbine ou forment des veines dans lesquelles circule l'air à travers la turbine.

Ces carters sont généralement annulaires, s'étendent selon l'axe longitudinal de la turbine, et doivent être parfaitement alignées de sorte à limiter les perturbations de l'écoulement de l'air, notamment lorsque les carters forment des veines.

Les carters comprennent chacun une bride annulaire par laquelle ils sont assemblés par boulonnage les uns aux autres. Ce type de configuration est par exemple divulgué dans le document US2010/0303608.

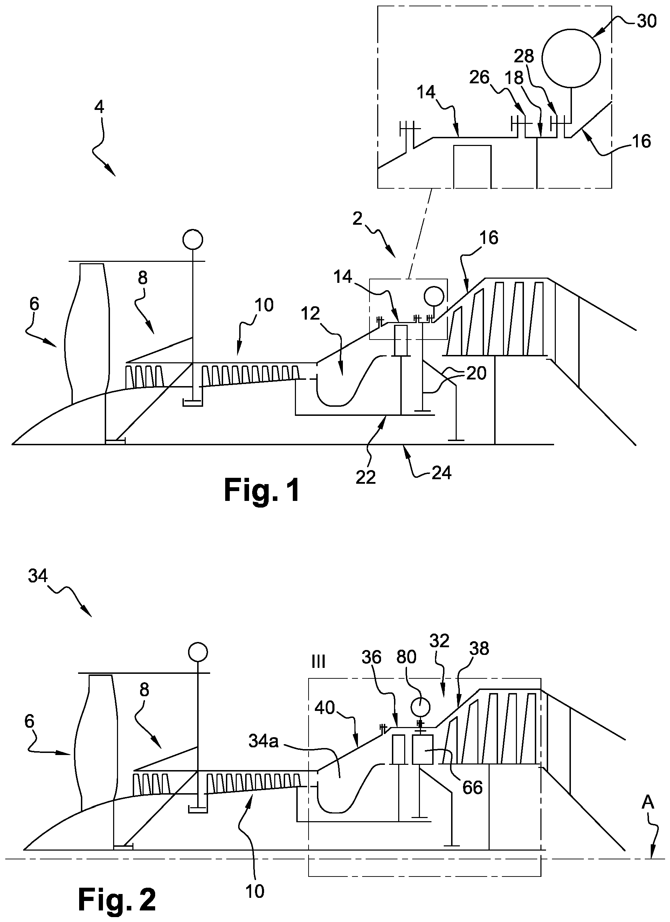

Dans une zone de jonction de l'extrémité aval du carter de la chambre de combustion avec un carter de turbine, tel que schématiquement illustré à la figure 1 qui représente une turbine 2 d'une turbomachine 4 de l'art antérieur, la turbomachine comprend un disque 6 de soufflante aspirant l'air vers un compresseur 8 basse pression aval, suivi d'un compresseur 10 haute pression qui débouche dans une chambre 12 de combustion. La chambre 12 de combustion débouche dans une turbine haute pression délimitée extérieurement par un carter 14 de turbine haute pression suivie d'une turbine basse pression délimitée extérieurement par un carter 16 de turbine basse pression. Les carters 14, 16 des turbines haute pression et basse pression sont séparés l'un de l'autre par au moins un carter 18 intermédiaire servant notamment à la fixation de supports 20 de paliers d'arbres 22, 24 des différentes turbines. Le carter 18 intermédiaire comprend à ses deux extrémités, une bride 26, 28 s'étendant radialement vers l'extérieur, et sur lesquelles sont fixés le carter 14 de turbine haute pression et le carter 16 de turbine basse pression.

En outre, un support 30 de la turbine est également fixé à l'une des deux brides 26, 28.

Cette architecture de fixation présente néanmoins un problème majeur. Un décalage axial et radial de la fixation entre le carter de turbine haute pression et le carter intermédiaire aura une influence sur la position relative, et donc la coaxialité, du carter de turbine haute pression avec le carter de turbine basse pression.

De plus, le positionnement de la bride amont du carter de turbine basse pression doit être précis puisque cette bride du carter de turbine basse pression est située dans une zone où sont intégrés les conduits de pilotage des jeux.

Ce mauvais alignement axial des carters peut alors générer des perturbations dans l'écoulement du flux d'air, impactant le rendement de la turbine, et, par conséquent, celui de la turbomachine.

En outre, le mauvais alignement peut être accentué par la déformation, due à la chaleur, des carters lorsque la turbine est en fonctionnement.

Une solution serait de supprimer le carter intermédiaire pour fixer les deux carters de turbines ensemble, toutefois la présence de ce carter intermédiaire est nécessaire, notamment pour permettre la fixation de la turbine à l'avion.

L'invention a notamment pour but d'apporter une solution simple, efficace et économique à ce problème.

A cet effet, l'invention propose, une turbine comprenant un carter intermédiaire intercalé axialement entre un carter de turbine haute pression amont et un carter de turbine basse pression aval et comprenant une virole annulaire externe depuis laquelle s'étend radialement une bride annulaire, caractérisé en ce que l'extrémité aval du carter de turbine haute pression et l'extrémité amont du carter de turbine basse pression sont fixées sur la bride annulaire radiale du carter intermédiaire.

En fixant le carter de turbine haute pression et le carter de turbine basse pression sur une même bride, on s'assure de la coaxialité des deux carters. Le risque de perturbation du flux d'air est alors réduit.

Avantageusement, l'extrémité aval du carter de turbine haute pression comprend une bride annulaire radiale fixée sur une face amont de la bride annulaire du carter intermédiaire, et l'extrémité amont du carter de turbine basse pression comprend une bride annulaire radiale fixée sur une face aval de la bride annulaire du carter intermédiaire.

Les brides respectives du carter de turbine haute pression et du carter de turbine basse pression sont alors de part et d'autre de la bride, ce qui permet de n'utiliser qu'une seule série de boulons dont la vis traverse les deux carters de turbines et la bride. La masse de la turbine s'en trouve allégée au bénéfice de la réduction de sa consommation énergétique.

De préférence, l'extrémité aval du carter de turbine haute pression et/ou l'extrémité amont du carter de turbine basse pression est en appui radialement vers l'intérieur sur la virole annulaire externe du carter intermédiaire.

Les deux carters ont alors un référentiel commun sur lequel ils peuvent être en appui, ce qui limite encore les risques d'une mauvaise coaxialité entre les deux carters de turbine. De plus, le positionnement de la bride du carter de turbine basse pression à l'extérieur de la virole externe du carter intermédiaire permet de protéger cette première de la chaleur et de faciliter le pilotage des jeux.

Selon un mode de réalisation, le carter intermédiaire comprend une pluralité de bras s'étendant entre une virole annulaire interne et la virole annulaire externe.

Ces bras ont notamment pour but de redresser le flux d'air en sortie de la turbine haute pression, et préalablement à son entrée dans la turbine basse pression.

Les viroles annulaires interne et externe peuvent être cylindriques ou tronconiques. Dans une réalisation particulière, la virole annulaire interne est tronconique à section augmentant vers l'aval et la virole annulaire externe est cylindrique. L'utilisation d'une surface cylindrique permet de faciliter l'appui radialement vers l'intérieur de l'extrémité aval du carter de turbine haute pression et de l'extrémité amont du carter de turbine basse pression.

De préférence, la bride annulaire du carter intermédiaire est agencée entre, selon l'axe longitudinal de la turbine, le bord d'attaque et le bord de fuite des bras.

Cela permet notamment une meilleure reprise d'efforts par le carter intermédiaire, et offre un meilleur point d'accrochage de la turbine à un avion, les bras pouvant être structuraux et participer à la rigidité de la turbine.

En outre, le carter intermédiaire peut comprendre une paroi annulaire amont et une paroi annulaire aval formée radialement à l'intérieur de la virole annulaire interne et reliées extérieurement à celle-ci et portant, respectivement, un palier de support et de guidage de l'arbre de turbine haute pression et un palier de support et de guidage de l'arbre de turbine basse pression.

Le carter intermédiaire peut alors servir de moyen de support et de guidage des arbres des turbines, ce qui évite de rapporter des pièces dédiées au support et au guidage des arbres, de telles pièces ayant pour conséquence d'augmenter la masse de la turbine.

De plus, le carter intermédiaire peut comprendre des moyens d'accrochage de la turbine à un avion.

Cela évite d'avoir recours à une bride dédiée ou au partage d'une bride de fixation d'un carter adjacent. La masse de la turbine n'est alors pas augmentée et il n'existe pas de risque d'impossibilité de fixation des moyens d'accrochage ou du carter adjacent en cas de défaut(s) de fabrication acceptable(s) de l'un ou l'autre.

Avantageusement la virole annulaire externe, la virole annulaire interne, les bras, les moyens d'accrochage, la paroi annulaire amont et la paroi annulaire aval sont réalisés d'une seule pièce, obtenu par exemple en fonderie.

Le carter intermédiaire peut alors devenir une pièce de référence de la turbine, ce qui facilite l'assemblage de la turbine, et augmente la qualité d'assemblage de la turbine.

De préférence, la turbine est accrochée à un avion par boulonnage des moyens d'accrochage sur l'avion.

La fixation par boulonnage est simple et rapide de mise en oeuvre et est, en outre, réversible autorisant un démontage aisé et rapide de la turbine, notamment pour des opérations de maintenance.

L'invention propose également une turbomachine comprenant une turbine telle que précédemment décrite.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en coupe d'une turbomachine de l'art antérieur comprenant une turbine, cette figure comprenant un médaillon de détail à échelle agrandie ;
- la figure 2 est une vue schématique en coupe d'une turbomachine comprenant une turbine selon l'invention ;
- la figure 3 est une vue de détail de la turbine selon l'encart III de la figure 2, et
- la figure 4 est une vue en coupe de détail du carter intermédiaire, du carter de turbine haute pression et du carter de turbine basse pression de la turbine des figures 2 et 3.

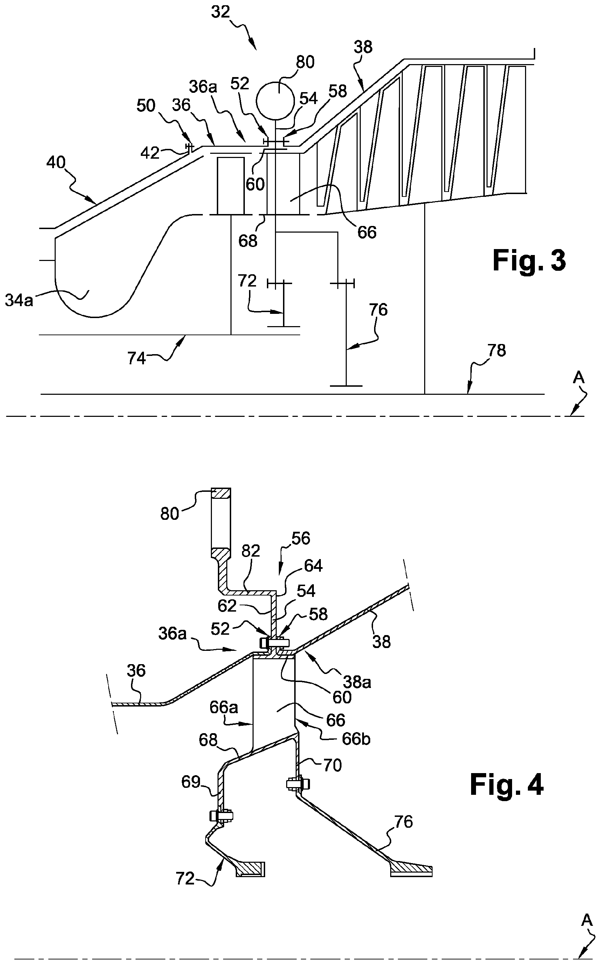

On a représenté sur les figures 2 et 3, une turbine 32 d'une turbomachine 34. La turbomachine 34 comprend une chambre 34a de combustion débouchant en aval dans une turbine haute pression délimitée extérieurement par un carter 36 de turbine haute pression, ci-après carter 36 HP, puis dans une turbine basse pression délimitée extérieurement par un carter 38 de turbine basse pression, ci-après carter 38 BP. Comme représenté, l'extrémité aval du carter 40 de la chambre de combustion est fixée par une bride 42 annulaire boulonnée sur une bride 50 annulaire de l'extrémité amont du carter 36 HP. L'extrémité aval 36a du carter 36 HP comprend une bride 52 annulaire radiale fixée sur une bride 54 annulaire radiale d'un carter 56 structurel intermédiaire, ci-après carter 56 intermédiaire, intercalé entre le carter 36 HP et le carter 38 BP (figure 4).

La turbine 32 regroupe, ici, la turbine haute pression et la turbine basse pression.

La turbomachine 34 comprend, comme celle de l'art antérieur, un disque 6 de soufflante aspirant l'air vers un compresseur 8 basse pression aval, suivi d'un compresseur 10 haute pression qui débouche dans la chambre 34a de combustion.

On entend les termes amont et aval en fonction du sens de circulation de l'air dans la turbomachine 34, c'est-à-dire de gauche à droite sur les dessins.

Comme représenté sur la figure 4, le carter 56 intermédiaire, le carter 36 HP et le carter 38 BP sont coaxiaux autour d'un axe A longitudinal de la turbomachine 34.

Le carter 38 BP comprend, à son extrémité 38a amont, une bride 58 radiale annulaire pour sa fixation avec le carter 56 intermédiaire.

Le carter 56 intermédiaire comprend une virole 60 annulaire externe cylindrique depuis laquelle s'étend radialement vers l'extérieur la bride 54 radiale annulaire sur laquelle sont fixées la bride 52 radiale annulaire du carter 36 HP et la bride 58 radiale annulaire du carter 38 BP.

Plus précisément, Comme on le voit sur la figure 4, la bride 52 radiale annulaire est en appui axialement vers l'aval et fixée sur une face 62 amont de la bride 54 annulaire du carter 56 intermédiaire et la bride 58 radiale annulaire est en appui et fixée sur une face 64 aval de la bride 54 annulaire du carter 56 intermédiaire.

L'extrémité 36a aval du carter 36 HP et l'extrémité 38a amont du carter 38 BP est en appui radialement vers l'intérieur sur la virole 60 annulaire externe du carter 56 intermédiaire.

Selon une variante non représentée, une seule des extrémités 36a, 38a des carters 36, 38 pourrait être en appui sur la virole 60 du carter 56 intermédiaire, l'autre des extrémités 36a 38a étant alors par exemple en appui sur une entretoise solidaire du carter 56 intermédiaire.

Le carter 56 intermédiaire comprend une pluralité de bras 66 s'étendant entre une virole 68 annulaire interne et la virole 60 annulaire externe. La virole 68 est tronconique à section augmentant vers l'aval comme représenté en figure 4.

Ces bras 66 ont notamment une fonction structurelle mais peuvent également avoir pour fonction complémentaire, comme dans le cas présent, de redresser le flux d'air sortant de la turbine haute pression préalablement à son entrée dans la turbine basse pression. Dans le cas de turbines de grandes dimensions, les conditions de température nécessitent un système de refroidissement complémentaire pour les bras 66, ce qui augmente la masse de la turbomachine. Pour ces turbomachines de grandes dimensions, on préfèrera utiliser des carénages aérodynamiques montés autour des bras 66 pour faciliter l'écoulement d'air, ces carénages étant conçus pour résister aux fortes températures des gaz chauds de la turbine.

De préférence, comme on le voit sur les figures, et notamment sur la figure 4, la bride 54 annulaire du carter 56 intermédiaire est agencée entre le bord 66a d'attaque et le bord 66b de fuite des bras 66.

Le carter 56 intermédiaire comprend également une paroi radiale 69 annulaire amont et une paroi radiale 70 annulaire aval formée radialement à l'intérieur de la virole 68 annulaire interne et reliées extérieurement à celle-ci et portant intérieurement, respectivement, un palier 72 de support et de guidage de l'arbre 74 de turbine haute pression et un palier 76 de support et de guidage de l'arbre 78 de turbine basse pression.

Enfin, le carter intermédiaire comprend des moyens 80 d'accrochage de la turbine à un avion. Ces moyens 80 d'accrochage sont reliés à la bride 54 annulaire par une paroi 82 axiale.

Avantageusement, la turbomachine 34 est reliée à l'avion par des boulons, ce qui assure un montage réversible, simple et rapide de la turbomachine 34 sur l'avion.

Avantageusement, la virole 60 annulaire externe, la virole 68 annulaire interne, les bras 66, les moyens 80 d'accrochage, la paroi 68 annulaire amont et la paroi 70 annulaire aval sont réalisés d'une seule pièce, obtenu par exemple en fonderie.

Il pourra en outre être prévu un enjoliveur (non représenté) venant autour des bras 66 afin de limiter les perturbations dans le flux d'air par les bras lorsque le carter 56 intermédiaire est réalisé d'une seule pièce. En effet, pour les turbomachines de grandes dimensions notamment, il est difficile de réaliser un carter 56 intermédiaire intégrant les enjoliveurs en fonderie pour un coût raisonnable.

## Revendications

1. Turbine (32) comprenant un carter (56) intermédiaire, un carter de turbine haute pression et un carter de turbine basse pression, ledit carter intermédiaire étant intercalé axialement entre ledit carter (36) de turbine haute pression amont et ledit carter (38) de turbine basse pression aval, ledit carter (56) intermédiaire comprenant une virole (60) annulaire externe depuis laquelle s'étend radialement vers l'extérieur une bride (54) annulaire, **caractérisée en ce que** l'extrémité (36a) aval du carter (36) de turbine haute pression et l'extrémité (38a) amont du carter (38) de turbine basse pression sont fixées sur la bride (54) annulaire radiale du carter (56) intermédiaire, et **en ce que** l'extrémité (36a) aval du carter (36) de turbine haute pression et/ou l'extrémité (38a) amont du carter (38) de turbine basse pression est en appui radialement vers l'intérieur sur la virole (60) annulaire externe du carter (56) intermédiaire.

2. Turbine (32) selon la revendication 1 dans laquelle l'extrémité (36a) aval du carter (36) de turbine haute pression comprend une bride (52) annulaire radiale fixée sur une face (62) amont de la bride (54) annulaire du carter (56) intermédiaire.

3. Turbine (32) selon la revendication 1 ou la revendication 2 dans laquelle l'extrémité (38a) amont du carter (38) de turbine basse pression comprend une bride (58) annulaire radiale fixée sur une face (64) aval de la bride (54) annulaire du carter (56) intermédiaire.

4. Turbine (32) selon l'une des revendications 1 à 3, dans laquelle le carter (56) intermédiaire comprend une virole interne et une pluralité de bras (66) s'étendant entre la virole (68) annulaire interne et la virole (60) annulaire externe.

5. Turbine (32) selon la revendication 4, dans laquelle la bride (54) annulaire du carter (56) intermédiaire est agencée, selon l'axe longitudinal de la turbine, entre le bord (66a) d'attaque et le bord (66b) de fuite des bras (66).

6. Turbine (32) selon la revendication 4 ou la revendication 5, dans laquelle, le carter (56) intermédiaire comprend une paroi (69) annulaire amont et une paroi (70) annulaire aval formées radialement à l'intérieur de la virole (68) annulaire interne et reliées extérieurement à celle-ci et portant, respectivement, un palier (72) de support et de guidage d'un arbre (74) de turbine haute pression et un palier (76) de support et de guidage d'un arbre (78) de turbine basse pression.

7. Turbine (32) selon l'une des revendications 1 à 6, dans laquelle le carter (56) intermédiaire comprend des moyens (80) d'accrochage de la turbine (32) à un avion.

8. Turbine (32) selon les revendications 4, 6 et 7, dans laquelle la virole (60) annulaire externe, la virole (68) annulaire interne, les bras (66), les moyens (80) d'accrochage, la paroi (69) annulaire amont et la paroi (70) annulaire aval sont réalisés d'une seule pièce obtenue par exemple en fonderie.

9. Turbine (32) selon la revendication 7 ou la revendication 8, dans laquelle elle est accrochée à un avion par boulonnage des moyens (80) d'accrochage sur l'avion.

10. Turbomachine (34) comprenant une turbine (32) selon l'une quelconque des revendications précédentes.

## Patentansprüche

1. Turbine (32) mit einem Zwischengehäuse (56), einem Hochdruckturbinengehäuse und einem Niederdruckturbinengehäuse, wobei das Zwischengehäuse axial zwischen dem stromaufwärtigen Hochdruckturbinengehäuse (36) und dem stromabwärtigen Niederdruckturbinengehäuse (38) eingesetzt ist, wobei das Zwischengehäuse (56) einen äußeren Mantelring (60) aufweist, von dem sich ein ringförmiger Flansch (54) radial nach außen erstreckt,
**dadurch gekennzeichnet, dass**
das stromabwärtige Ende (36a) des Hochdruckturbinengehäuses (36) und das stromaufwärtige Ende (38a) des Niederdruckturbinengehäuses (38) an den radialen, ringförmigen Flansch (54) des Zwischengehäuses (56) befestigt sind, und dass
das stromabwärtige Ende (36a) des Hochdruckturbinengehäuses (36) und/oder das stromaufwärtige Ende (38a) des Niederdruckturbinengehäuses (38) radial nach innen am äußeren Mantelring (60) des Zwischengehäuses (56) anliegt/anliegen.

2. Turbine (32) nach Anspruch 1, wobei
das stromabwärtige Ende (36a) des Hochdruckturbinengehäuses (36) einen radialen, ringförmigen Flansch (52) aufweist, der an eine stromaufwärtige Seite (62) des ringförmigen Flansches (54) des Zwischengehäuses (56) befestigt ist.

3. Turbine (32) nach Anspruch 1 oder Anspruch 2, wobei
das stromaufwärtige Ende (38a) des Niederdruckturbinengehäuses (38) einen radialen, ringförmigen Flansch (58) aufweist, der an eine stromabwärtige Seite (64) des ringförmigen Flansches (54) des Zwischengehäuses (56) befestigt ist.

4. Turbine (32) nach einem der Ansprüche 1 bis 3, wobei
das Zwischengehäuse (56) einen inneren Mantelring und eine Mehrzahl von Armen (66) enthält, die sich zwischen dem inneren Mantelring (68) und dem äußeren Mantelring (60) erstrecken.

5. Turbine (32) nach Anspruch 4, wobei
der ringförmige Flansch (54) des Zwischengehäuses (56) entlang der Längsachse der Turbine zwischen der Anströmkante (66a) und der Abströmkante (66b) der Arme (66) angeordnet ist.

6. Turbine (32) nach Anspruch 4 oder Anspruch 5, wobei
das Zwischengehäuse (56) eine stromaufwärtige Ringwand (69) und eine stromabwärtige Ringwand (70) aufweist, die radial innerhalb des inneren Mantelrings (68) ausgebildet sind und außen mit diesem verbunden sind und ein Trag- und Führungslager (72) für eine Hochdruckturbinenwelle (74) bzw. ein Trag- und Führungslager (76) für eine Niederdruckturbinenwelle (78) tragen.

7. Turbine (32) nach einem der Ansprüche 1 bis 6, wobei
das Zwischengehäuse (56) Verhakungsmittel (80) zum Verhaken der Turbine (32) mit einem Flugzeug aufweist.

8. Turbine (32) nach einem der Ansprüche 4, 6 und 7, wobei
der äußere Mantelring (60), der innere Mantelring (68), die Arme (66), die Verhakungsmittel (80), die stromaufwärtige Ringwand (69) und die stromabwärtige Ringwand (70) aus einem Stück ausgebildet sind, das beispielsweise in der Gießerei wird.

9. Turbine (32) nach Anspruch 7 oder Anspruch 8, wobei
sie mit einem Flugzeug durch Verschrauben der Verhakungsmittel (80) mit dem Flugzeug verhakt ist.

10. Turbomaschine bzw. Turbotriebwerk (34) mit einer Turbine (32) nach einem der vorangehenden Ansprüche.

## Claims

1. A turbine (32) comprising an intermediate casing (56), a high pressure turbine casing and a low pressure turbine casing, said intermediate casing being axially inserted between said upstream high pressure turbine casing (36) and said downstream low pressure turbine casing (38) and comprising an outer annular shroud (60) from which an annular flange (54) radially extends, **characterized in that** the downstream end (36a) of the high pressure turbine casing (36) and the upstream end (38a) of the low pressure turbine casing (38) are attached on the radial annular flange (54) of the intermediate casing (56), and **in that** the downstream end (36a) of the high pressure turbine casing (36) and/or the upstream end (38a) of the low pressure turbine casing (38) radially bears inwards on the outer annular shroud (60) of the intermediate casing (56).

2. A turbine (32) according to claim 1, wherein the downstream end (36a) of the high pressure turbine casing (36) comprises a radial annular flange (52) attached on an upstream face (62) of the annular flange (54) of the intermediate casing (56).

3. A turbine (32) according to claim 1 or claim 2, wherein the upstream end (38a) of the low pressure turbine casing (38) comprises a radial annular flange (58) attached on a downstream face (64) of the annular flange (54) of the intermediate casing (56).

4. A turbine (32) according to one of claims 1 to 3, wherein the intermediate casing (56) comprises an inner shroud and a plurality of arms (66) extending between the inner annular shroud (68) and the outer annular shroud (60).

5. A turbine (32) according to claim 4, wherein the annular flange (54) of the intermediate casing (56) is arranged along the longitudinal axis of the turbine, between the leading edge (66a) and the trailing edge (66b) of the arms (66).

6. A turbine (32) according to claim 4 or claim 5, wherein the intermediate casing (56) comprises an upstream annular wall (69) and a downstream annular wall (70) radially formed inside the inner annular shroud (68) and externally connected therewith and, respectively carrying a bearing (72) for supporting and guiding a shaft (74) of the high pressure turbine and a bearing (76) for supporting and guiding a shaft (78) of the low pressure turbine.

7. A turbine (32) according to one of claims 1 to 6, wherein the intermediate casing (56) comprises means (80) for fixing the turbine (32) to an aircraft.

8. A turbine (32) according to claims 4, 6 and 7, wherein the outer annular shroud (60), the inner annular shroud (68), the arms (66), the fixing means (80), the upstream annular wall (69) and the downstream annular wall (70) are produced in one piece, for instance produced in a foundry.

9. A turbine (32) according to claim 7 or claim 8, wherein it is fixed to an aircraft by bolting the means (80) for fixing on the aircraft.

10. A turbomachine (34) comprising a turbine (32) according to any one of the preceding claims.
